(19) Europäisches Patentamt
European Patent Office
Office européen des brevets

(11) **EP 3 119 260 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(51) Int Cl.:
*A47L 9/19* *(2006.01)* *A47L 9/20* *(2006.01)*
*A47L 9/28* *(2006.01)*

(21) Anmeldenummer: **14711265.0**

(22) Anmeldetag: **20.03.2014**

(86) Internationale Anmeldenummer:
**PCT/EP2014/055601**

(87) Internationale Veröffentlichungsnummer:
**WO 2015/139751 (24.09.2015 Gazette 2015/38)**

(54) **VERFAHREN ZUM ABREINIGEN EINES FILTERS EINER STAUBSAUGVORRICHTUNG UND STAUBSAUGVORRICHTUNG**

METHOD FOR CLEANING OF A FILTER OF A VACUUM CLEANER AND VACUUM CLEANER

MÉTHODE POUR NETTOYER UN FILTRE D'UN ASPIRATEUR ET L'ASPIRATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.01.2017 Patentblatt 2017/04**

(73) Patentinhaber: **Alfred Kärcher GmbH & Co. KG 71364 Winnenden (DE)**

(72) Erfinder:
• **HENSEL, Maic**
**71522 Backnang (DE)**

• **OESTERLE, Markus**
**71566 Althütte (DE)**

(74) Vertreter: **Hoeger, Stellrecht & Partner Patentanwälte mbB Uhlandstrasse 14c 70182 Stuttgart (DE)**

(56) Entgegenhaltungen:
**WO-A1-2012/107103 DE-U1-202012 003 282**

EP 3 119 260 B1

**Beschreibung**

Die Erfindung betrifft ein Verfahren zum Abreinigen eines Filters einer Staubsaugvorrichtung, wobei im Betrieb der Staubsaugvorrichtung das Filter von Saugluft durchströmt wird, welche durch ein Gebläse erzeugt wird.

Die Erfindung betrifft ferner eine Staubsaugvorrichtung, umfassend einen Saugeinlass, einen Schmutzsammelbehälter, eine Filtereinrichtung mit mindestens einem Filter, ein Saugaggregat mit einem Gebläse, wobei der Schmutzsammelbehälter über die Filtereinrichtung mit dem Saugaggregat in Strömungsverbindung steht, eine Abreinigungseinrichtung für die Filtereinrichtung, einen ersten Drucksensor, welcher einen ersten Druck in einer Zuströmung der Filtereinrichtung ermittelt, einen zweiten Drucksensor, welcher einen zweiten Druck in einer Abströmung der Filtereinrichtung ermittelt, und eine Steuerungseinrichtung, welche die Abreinigungseinrichtung ansteuert und welche signalwirksam mit dem ersten Drucksensor und dem zweiten Drucksensor verbunden ist.

Aus der WO 2012/107103 A1 ist ein Verfahren zur Abreinigung eines Filters eines Staubsaugers bekannt, bei dem die Saugleistung eines Saugaggregats vor einem Übergang eines Fremdluftventils in eine geöffnete Ventilstellung erhöht und später wieder reduziert wird.

Aus der WO 2012/107595 A1 ist ein Verfahren zum Abreinigen eines Filters eines Staubsaugers bekannt, bei dem eine Energieversorgung einer Fremdluftventileinrichtung über eine Batterieeinrichtung erfolgt.

Aus der JP 4792476 ist ein Bodenreinigungsgerät bekannt, welches einen Filter mit einem Einlass und einem Auslass aufweist. Ein erster Drucksensor ist an dem Einlass des Filters angeordnet. Ein zweiter Drucksensor ist an dem Auslass des Filters angeordnet. Es ist ein Controller vorgesehen, welcher ein Signal zur Veranlassung einer Filterabreinigung aktiviert, wobei diese Aktivierung als Antwort auf eine vorgegebene Druckdifferenz zwischen dem ersten Drucksensor und dem zweiten Drucksensor erfolgt. Der Controller kann zwischen der vorgegebenen Druckdifferenz, welche eine unerwünschte Belastung des Filters angibt, und einer Druckdifferenz zwischen dem ersten Drucksensor und dem zweiten Drucksensor, welche eine Verstopfung eines Strömungspfads repräsentiert, unterscheiden.

Aus der EP 2 548 490 A2 ist ein Verfahren zur Füllstandsüberwachung bei einem Staubsauger bekannt, wobei der Staubsauger ein im Betrieb mit elektrischer Leistung gespeistes und einen Unterdruck sowie einen Volumenstrom verursachendes Antriebsaggregat umfasst, und wobei im Betrieb Daten für ein Maß für einen tatsächlichen Unterdruck sowie für ein Maß für einen tatsächlichen Volumenstrom aufgenommen werden. In einem Speicher sind Daten für eine volumenstromabhängige Kennlinie abgelegt. Anhand des tatsächlichen Volumenstroms wird ein Arbeitspunkt auf der Kennlinie ermittelt und anhand des tatsächlichen Unterdrucks und des zum Arbeitspunkt auf der Kennlinie gehörigen Unterdrucks wird ein momentaner Füllstand des Staubsaugers ermittelt.

Aus der DE 20 2012 003 282 U1 ist ein Sauger mit mindestens einem Motor, mit einem Sauganschluss für einen mit dem Sauger zu verbindendes Gerät mit mindestens einem Filter und einer Gerätesteckdose, an die das Gerät elektrisch anschließbar ist, bekannt, wobei der Sauger wenigstens einen Strom-/Leistungssensor aufweist, der die Strom-/Leistungsaufnahme des an die Gerätesteckdose angeschlossenen Gerätes erfasst und der an einen Prozessor angeschlossen ist, der unter Berücksichtigung des Strom-/Leistungsaufnahmewertes ein Signal zur Reinigung des Filters liefert.

Aus der DE 20 2012 003 280 U1 ist ein Sauger mit mindestens einem Sauganschluss für ein Gerät, mit mindestens einem Motor, mit wenigstens einem Filter und mit wenigstens einem Strömungsraum vor und wenigstens einem Strömungsraum nach dem Filter bekannt. Beide Strömungsräume sind mit jeweils wenigstens einer Messstelle versehen, an die mindestens ein Drucksensor angeschlossen ist, der mit einem Steuerungssignalvorrichtung verbunden ist, die ein Signal sendet, wenn die Druckdifferenz zwischen den Drücken in den beiden Strömungsräumen einen Grenzwert erreicht.

Aus der EP 0 453 177 B1 ist eine angetriebene mobile Oberflächenreinigungsmaschine mit einem Luftabsaugsystem zur Staubbegrenzung bekannt. Es ist eine Einrichtung vorgesehen, um während des Reinigungszyklus Filter zu schütteln oder zu stoßen, sodass akkumulierter Staub entfernt wird. Es ist ferner eine aktivierbare Steuereinrichtung vorgesehen, um einen selbständigen Filter-Reinigungszyklus sequentiell an jedem verschmutztem Filter während eines Maschinenbetriebs zu veranlassen und durchzuführen. Weiterhin ist eine Aktivierungseinrichtung vorgesehen, um die Steuerungseinrichtung zu aktivieren, wobei die Aktivierungseinrichtung entweder eine automatische Einrichtung, um den Differenzluftdruck über wenigstens einen der Filter zu erfassen und zu bestimmen, wenn er bei einem vorbestimmten Differenzluftdruck-Niveau angelangt ist, oder eine automatische Zeitsteuereinrichtung, die ein Signal an die Steuereinrichtung sendet, oder eine manuelle Einrichtung zur Aktivierung der Steuereinrichtung aufweist.

Der Erfindung liegt die Aufgabe zugrunde, ein Verfahren der eingangs genannten Art bereitzustellen, mittels welchem sich eine bedarfsgerechte Abreinigung des Filters realisieren lässt.

Diese Aufgabe wird bei dem eingangs genannten Verfahren erfindungsgemäß dadurch gelöst, dass die Schritte vorgesehen werden:

-    Messung eines ersten Drucks an einer Zuströmung des Filters;

- Messung eines zweiten Drucks an einer Abströmung des Filters;

- Ermittlung eines Druckabfalls an dem Filter als Druckdifferenz zwischen dem ersten Druck und dem zweiten Druck;

- Ermittlung einer einen Volumenstrom der Saugluft in der Abströmung des Filters charakterisierenden Größe;

- Ermittlung einer einen Strömungswiderstand des Filters charakterisierenden Größe aus der Druckdifferenz und der den Volumenstrom charakterisierenden Größe; und

- Einleitung einer Filterabreinigung in Abhängigkeit von der ermittelten den Strömungswiderstand des Filters charakterisierenden Größe.

Bei der erfindungsgemäßen Lösung wird zusätzlich zu dem Druckabfall an dem Filter auch der Volumenstrom in einer Absaugleitung an dem Filter berücksichtigt.

Grundsätzlich verändert eine Filterverschmutzung (Filterzusetzung) den Druckabfall an dem Filter. In den Druckabfall an dem Filter gehen jedoch auch andere Einflüsse des Strömungspfads an der Saugvorrichtung ein. So kann jegliche Änderung der Strömungsverhältnisse diesen Druckabfall quantitativ beeinflussen. Geometrische Änderungen im Strömungspfad und Änderungen im Untergrund, auf dem gesaugt wird, können eine Änderung des Druckabfalls verursachen.

Bei der erfindungsgemäßen Lösung wird der Volumenstrom der Saugluft mit berücksichtigt. Dadurch lassen sich zumindest näherungsweise andere Einflussgrößen, die den Druckabfall an dem Filter beeinflussen, jedoch nicht den Strömungswiderstand am Filter verändern, eliminieren. Es wird dadurch beispielsweise sichergestellt, dass eine Saugschlauchverstopfung nicht automatisch zu einer Filterabreinigung führt.

Durch das erfindungsgemäße Verfahren lässt sich auf einfache Weise eine bedarfsgerechte Filterabreinigung realisieren, welche "Störmöglichkeiten" in dem Strömungspfad außerhalb einer Filterverschmutzung eliminiert bzw. kompensiert. Es wird dann nur noch eine Filterabreinigung durchgeführt, wenn dies notwendig ist.

Ferner lassen sich dann auch weitere Filterüberprüfungsmöglichkeiten realisieren. Es kann beispielsweise geprüft werden, ob nach einigen oder mehrmaligen Filterabreinigungsvorgängen keine Erholung des Filters eintritt und es kann so ermittelt werden, ob beispielsweise ein Filteraustausch notwendig ist.

Grundsätzlich kann dabei die den Volumenstrom der Saugluft an dem Filter charakterisierende Größe direkt ermittelt werden über einen entsprechenden Sensor. Bei einer vorteilhaften Ausführungsform kann diese Größe aber auch aus einer gespeicherten Kennlinie des Gebläses berechnet werden.

Die den Strömungswiderstand des Filters charakterisierende Größe ist ein Verlustbeiwert, der das Filter im Gegensatz zum Druckabfall direkt charakterisiert.

Bei einem Ausführungsbeispiel wird die ermittelte den Strömungswiderstand charakterisierende Größe mit einem Schwellenwert verglichen, und wenn diese Größe oberhalb des Schwellenwerts liegt, wird eine Filterabreinigung eingeleitet. Es lässt sich so auf einfache Weise bestimmen, ob eine Filterabreinigung durchgeführt werden soll oder nicht. Der Schwellenwert, welcher insbesondere vorgegeben ist oder wird, ist beispielsweise abgespeichert und wurde zuvor ermittelt.

Ganz besonders vorteilhaft ist es, wenn die den Volumenstrom charakterisierende Größe aus einer Kennlinie des Gebläses ermittelt wird, welche eine Abhängigkeit des Volumenstroms von einem Druck in der Abströmung des Filters angibt. Eine solche Kennlinie kann beispielsweise zuvor ausgemessen werden und dann abgespeichert werden. Der Druck in der Abströmung ist über den zweiten Druck zumindest näherungsweise bekannt. Es kann dann rechnerisch ein Maß für den Volumenstrom bestimmt werden, ohne dass ein weiterer Sensor vorgesehen werden muss.

Insbesondere wird der zweite Druck als Maß für den Druck in der Abströmung des Filters genommen. Dadurch lässt sich mit guter Näherung der Druck in einer Absaugleitung zwischen dem Gebläse und dem Filter bestimmen.

Die Kennlinie oder ein diese annähernder Zusammenhang wurde zuvor ermittelt und ist in einer Speichereinrichtung gespeichert und ist insbesondere als Wertetabelle gespeichert. Dadurch kann die den Volumenstrom charakterisierende Größe auf einfache Weise ermittelt werden. Insbesondere ist kein zusätzlicher konstruktiver Aufwand nötig bzw. sind keine weiteren Bauteile notwendig.

Die den Strömungswiderstand charakterisierende Größe wird insbesondere als Quotient aus der ermittelten Druckdifferenz und einer Funktion der ermittelten, den Volumenstrom charakterisierenden Größe bestimmt. Die den Strömungswiderstand charakterisierende Größe ist insbesondere ein Verlustbeiwert. Sie kann auf einfache Weise aus gemessenen und rechnerisch ermittelten Größen bestimmt werden.

Insbesondere wird der Quotient aus der ermittelten Druckdifferenz und einer Potenz und insbesondere der zweiten Potenz der ermittelten den Volumenstrom charakterisierenden Größe berechnet. Dadurch ergibt sich eine einfache Formel für eine den Strömungswiderstand des Filters charakterisierende Größe.

Es kann dabei auch vorgesehen sein, dass geprüft wird, ob der Schwellenwert innerhalb einer bestimmten Zeitspanne mehrmals überschritten wird. Dies deutet darauf hin, dass trotz mehrmaliger Filterabreinigungsvorgänge das Filter sich nicht mehr erholt. Es kann dann eine Warnanzeige für einen Bediener abgegeben werden, dass ein größerer Eingriff wie beispielsweise ein Filteraustausch notwendig ist.

Es wird beispielsweise alternativ oder auch zusätzlich geprüft, ob nach Überschreiten des Schwellenwerts, welcher ein erster Schwellenwert ist, ein zweiter Schwellenwert überschritten wird, welcher größer ist als der erste Schwellenwert. Wenn beispielsweise nach Überschreiten des ersten Schwellenwerts und einem Abreinigungsvorgang innerhalb einer bestimmten Zeitspanne die Überprüfung ergibt, dass auch ein zweiter höherer Schwellenwert überschritten ist, dann kann dies auf ein Filterproblem hindeuten, welches insbesondere einen größeren Eingriff erforderlich macht. Es kann dann eine entsprechende Warnanzeige abgegeben werden.

Insbesondere wird dann ein Warnsignal ausgegeben, wenn der Schwellenwert in der bestimmten Zeitspanne mit einer Mindestanzahl überschritten wird und/oder der zweite Schwellenwert überschritten wird. Das Warnsignal, welches beispielsweise ein optisches und/oder akustisches Signal ist, zeigt dann an, dass keine ausreichende Filtererholung erfolgt.

Insbesondere wird zur Durchführung einer Filterabreinigung das Filter mit Fremdluft beaufschlagt. Es erfolgt dadurch gewissermaßen ein Freiblasen des Filters. Es können alternativ oder zusätzlich auch weitere Vorgänge wie beispielsweise ein mechanisches Rütteln des Filters erfolgen.

Es ist dann günstig, wenn eine Fremdluftventileinrichtung angesteuert wird und für eine Filterabreinigung eine geschlossene Ventilstellung in eine offene Ventilstellung gebracht wird, um gewissermaßen das Filter freizublasen.

Bei einer Staubsaugvorrichtung der eingangs genannten Art wird erfindungsgemäß eine Ermittlungseinrichtung verwendet, welche eine einen Volumenstrom an Saugluft an der Filtereinrichtung charakterisierende Größe ermittelt, wobei die Steuerungseinrichtung eine Auswertungseinrichtung umfasst, welche aus einer Druckdifferenz zwischen dem ersten Druck und dem zweiten Druck und der den Volumenstrom charakterisierenden Größe eine einen Strömungswiderstand der Filtereinrichtung charakterisierende Größe ermittelt, und wobei die Steuerungseinrichtung eine Schwellenwertprüfungseinrichtung umfasst, welche prüft, ob die ermittelte den Strömungswiderstand charakterisierende Größe oberhalb eines Schwellenwerts liegt, und in diesem Falle einen Filterabreinigungsvorgang durch Ansteuerung der Fremdluftventileinrichtung initiiert.

An der erfindungsgemäßen Staubsaugvorrichtung lässt sich das erfindungsgemäße Verfahren durchführen.

Vorteilhafte Ausgestaltungen der erfindungsgemäßen Staubsaugvorrichtung wurden bereits im Zusammenhang mit dem erfindungsgemäßen Verfahren erläutert.

Die Ermittlungseinrichtung stellt die den Volumenstrom charakterisierende Größe bereit. Die Auswertungseinrichtung berechnet damit und mit der ermittelten Druckdifferenz eine den Strömungswiderstand der Filtereinrichtung charakterisierende Größe. Durch die Schwellenwertüberprüfungseinrichtung wiederum lässt sich dann ohne wesentliche Beeinflussung des restlichen Strömungspfads prüfen, ob eine Filterabreinigung notwendig ist oder nicht.

Insbesondere umfasst die Steuerungseinrichtung eine Speichereinrichtung, in welcher eine Kennlinie des Gebläses oder ein diese annähernder Zusammenhang gespeichert ist, wobei die Kennlinie die Abhängigkeit des Volumenstroms von einem Druck in der Abströmung der Filtereinrichtung angibt. Es lassen sich so Ereignisse (insbesondere implizit) berücksichtigen, die quantitativ zu dem Druckabfall an der Filtereinrichtung beitragen, jedoch nicht durch eine Verschmutzung des Filter verursacht sind. Aus der Kennlinie bzw. aus dem diese annähernden Zusammenhang lässt sich auf einfache Weise ein Volumenstrom bzw. eine den Volumenstrom annähernde Größe in der Abströmung der Filtereinrichtung ermitteln.

Insbesondere ist die Ermittlungseinrichtung in die Steuerungseinrichtung integriert und die den Volumenstrom charakterisierende Größe wird aus der Kennlinie oder den diese charakterisierenden Zusammenhang ermittelt. Dadurch lässt sich die den Volumenstrom charakterisierende Größe bestimmen, ohne dass ein entsprechender Messsensor vorgesehen werden muss.

Günstig ist es, wenn eine Warnanzeige vorgesehen ist, welche einen Filterzustand anzeigt, und welche durch die Steuerungseinrichtung angesteuert ist. Durch die Warnanzeige lässt sich insbesondere anzeigen, ob nach einer oder mehreren Filterabreinigungsvorgängen keine relevante Erholung der Filtereinrichtung eingetreten ist.

Die Staubsaugvorrichtung kann als Stand-alone-Gerät und insbesondere als Stand-alone-Staubsauger ausgebildet sein oder in eine Bodenreinigungsmaschine wie beispielsweise eine Kehrmaschine integriert sein.

Insbesondere ist im Betrieb der Staubsaugvorrichtung das erfindungsgemäße Verfahren durchgeführt. Mit der erfindungsgemäßen Staubsaugvorrichtung lässt sich das erfindungsgemäße Verfahren durchführen. Das erfindungsgemäße Verfahren lässt sich an der erfindungsgemäßen Staubsaugvorrichtung durchführen.

Die nachfolgende Beschreibung bevorzugter Ausführungsformen dient im Zusammenhang mit den Zeichnungen der näheren Erläuterung der Erfindung. Es zeigen:

Figur 1     eine schematische Schnittansicht eines Ausführungsbeispiels eines erfindungsgemäßen Staubsaugers;

Figur 2     eine vergrößerte Darstellung einer Fremdluftventileinrichtung des Staubsaugers gemäß Figur 1;

Figur 3    ein Blockschaltbild eines Ausführungsbeispiels einer Steuerungseinrichtung des Staubsaugers gemäß Figur 1;

Figur 4    eine vergrößerte Darstellung der Filtereinrichtung gemäß Figur 1 mit den Druckverhältnissen;

Figur 5    schematisch eine Kennlinie eines Gebläses des Staubsaugers gemäß Figur 1 und eine Gerätekennlinie des Staubsaugers gemäß Figur 1;

Figur 6    ein Ausführungsbeispiels eines Ablaufdiagramms zur Prüfung, ob eine Filterabreinigung durchgeführt werden soll; und

Figur 7    schematisch die Druckverhältnisse entlang eines Strömungspfads bei dem Staubsauger gemäß Figur 1.

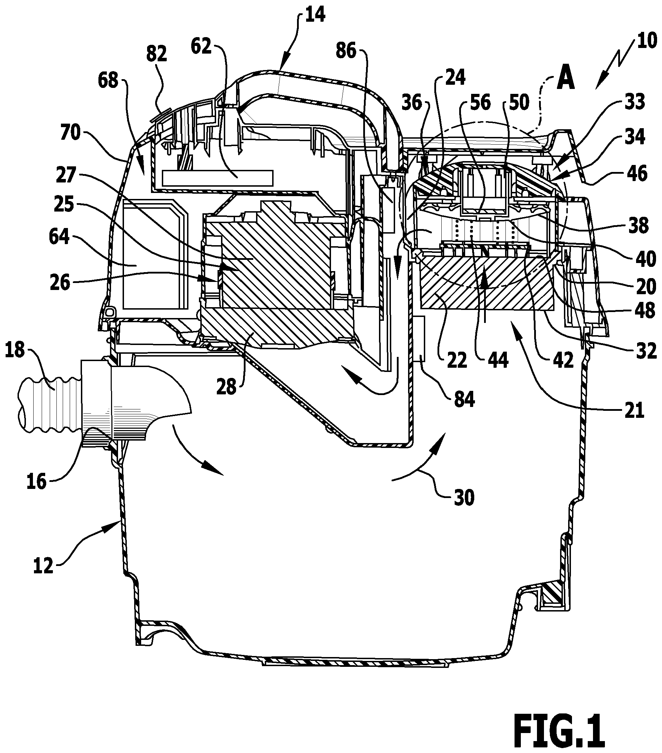

Ein Ausführungsbeispiel eines Staubsaugers 10, welches in Figur 1 in einer Schnittansicht schematisch dargestellt ist, weist einen Schmutzsammelbehälter 12 auf, auf den ein Saugkopf 14 aufgesetzt ist. Der Staubsauger 10 ist ein Beispiel für eine Staubsaugvorrichtung und als Stand-alone-Gerät (als autonomes Gerät) ausgebildet. Der Schmutzsammelbehälter 12 weist einen Saugeinlass 16 auf, an den in üblicher Weise ein Saugschlauch 18 angeschlossen werden kann. Der Saugkopf 14 dichtet den Schmutzsammelbehälter 12 oberseitig ab und bildet einen Saugauslass 20 aus, an dem eine Filtereinrichtung 21 mit (mindestens) einem Filter 22 gehalten ist. An das Filter 22 schließt sich eine Absaugleitung 24 an, über die der Schmutzsammelbehälter 12 mit einem Saugaggregat 26 in Strömungsverbindung steht. Das Saugaggregat 26 umfasst eine Elektromotoreinrichtung 25 mit (mindestens) einem Elektromotor 27 und ein vom Elektromotor 27 drehend angetriebenes Gebläse 28.

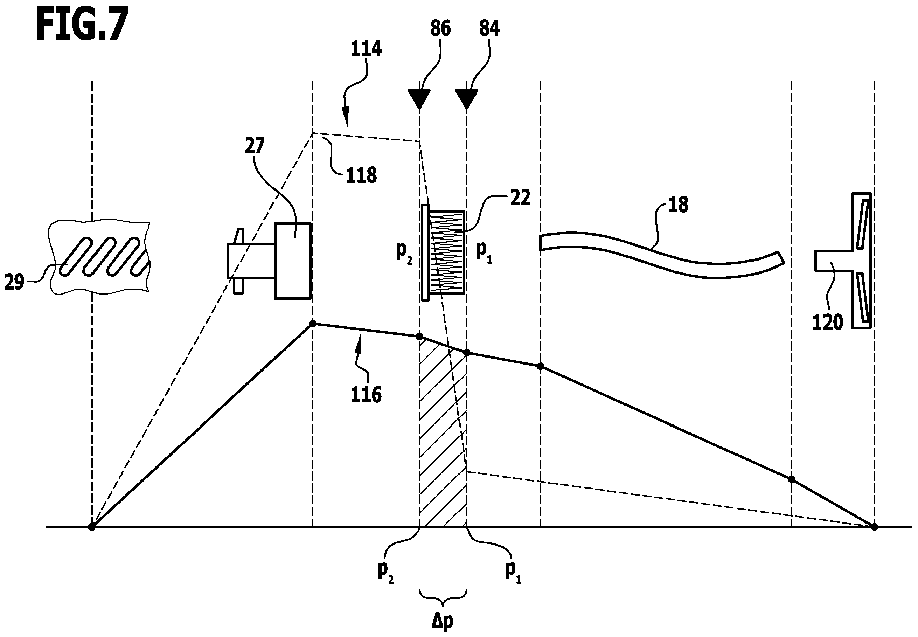

Der Schmutzsammelbehälter 12 wird im Betrieb des Staubsaugers 10 vom Saugaggregat 26 mit Unterdruck beaufschlagt, sodass sich eine in Figur 1 durch die Pfeile 30 dargestellte Saugströmung ausbildet. Unter der Wirkung der Saugströmung 30 kann mit Schmutz beladene Saugluft über den Saugeinlass 16 in den Schmutzsammelbehälter 12 eingesaugt werden, die dann vom Saugaggregat 26 abgesaugt werden kann. Die Saugluft kann vom Saugaggregat 26 über Abluftöffnungen 29 (Figur 7) des Saugkopfes 14 an die Umgebung abgegeben werden.

Die Saugluft durchströmt das Filter 22, sodass sich mitgeführte Feststoffpartikel auf der dem Schmutzsammelbehälter 12 zugewandten Schmutzseite 32 des Filters 22 ablagern. Es ist deshalb erforderlich, das Filter 22 von Zeit zu Zeit abzureinigen, da es ansonsten einen zunehmenden Strömungswiderstand ausbildet, wodurch die Saugwirkung des Staubsaugers 10 beeinträchtigt wird.

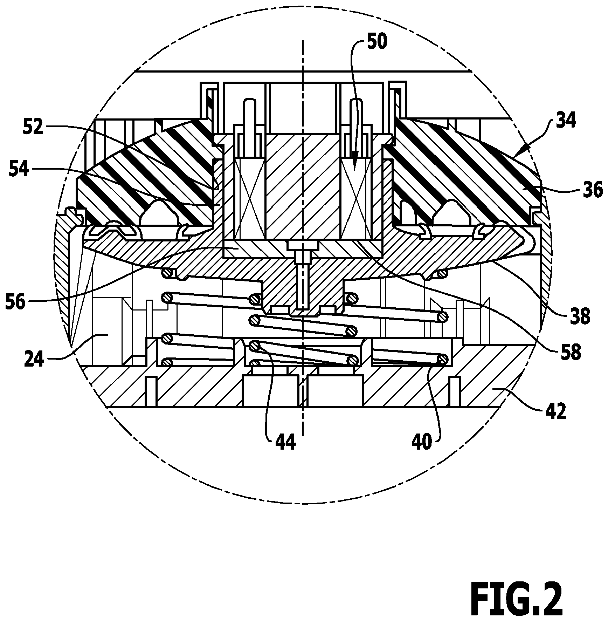

Zur Abreinigung des Filters 22 ist oberhalb des Filters 22 im Saugkopf 14 eine Abreinigungseinrichtung 33, welche als Fremdluftventileinrichtung 33 ausgebildet ist, mit (mindestens) einem Fremdluftventil 34 angeordnet (in Figur 2 vergrößert dargestellt). Es umfasst eine ortsfest im Saugkopf 14 angeordnete Ventilhalterung 36, die einen Ventilsitz ausbildet für einen beweglichen Ventilkörper in Form eines Ventiltellers 38. Der Ventilteller 38 ist mittels einer Schließfeder 40 mit einer Schließkraft in Richtung auf die Ventilhalterung 36 beaufschlagt. Die Schließfeder 40 ist zwischen einer plattenartigen, eine Vielzahl von Strömungsdurchlässen aufweisenden, ortsfest im Saugkopf 14 angeordneten Filterhalterung 42 und dem Ventilteller 38 eingespannt. Zusätzlich zur Schließfeder 40 trägt die Filterhalterung 42 ein federndes Anschlagelement in Form einer Anschlagfeder 44. Diese weist insbesondere (vorzugsweise ebenso wie die Schließfeder 40) eine lineare Kennlinie auf. Sie ist beispielsweise als Schraubenfeder ausgebildet. Im Gegensatz zur Schließfeder 40 steht die Anschlagfeder 44 in der Schließstellung des Ventiltellers 38 nicht unter Vorspannung. Erst wenn sich der Ventilteller 38 vom Ventilsitz der Ventilhalterung 36 abhebt, gelangt die Anschlagfeder 44 an der Unterseite des Ventiltellers 38 zur Anlage und wird bei einer weiteren Bewegung des Ventiltellers 38 etwas zusammengedrückt. Sie übt dadurch eine zunehmende Rückstellkraft auf den Ventilteller 38 aus und beschleunigt die Bewegung des Ventiltellers 38 ausgehend von seiner (in Figur 2 dargestellten) geschlossenen Ventilstellung über eine geöffnete Ventilstellung wieder zurück in die geschlossene Ventilstellung. In der geöffneten Ventilstellung nimmt der Ventilteller 38 einen Abstand zu der Ventilhalterung 36 ein, die den Ventilsitz ausbildet.

Die Ventilhalterung 36 weist eine Vielzahl von in der Zeichnung nicht dargestellten Durchgangsöffnungen auf, deren Mündungsbereiche vom Ventilteller 38 verschlossen werden, wenn dieser seine geschlossene Ventilstellung einnimmt. In Höhe der Ventilhalterung 36 weist der Saugkopf 14 eine seitliche Öffnung 46 auf. Über die seitliche Öffnung 46 kann Fremdluft in die Durchgangsöffnungen der Ventilhalterung 36 einströmen. Nimmt der Ventilteller 36 seine zur Ventilhalterung 36 beabstandete offene Ventilstellung ein, so steht die seitliche Öffnung 46 über die Durchgangsöffnungen der Ventilhalterung 36 mit der Absaugleitung 24 in Strömungsverbindung und Fremdluft kann die dem Schmutzsammelbehälter 12 abgewandte Reinseite 48 des Filters 22 beaufschlagen. Nimmt der Ventilteller 38 seine geschlossene Ventilstellung ein, so ist die Strömungsverbindung zwischen der seitlichen Öffnung 46 und der Absaugleitung 24 unterbrochen.

In einem zentralen Bereich trägt die Ventilhalterung 36 einen Elektromagneten 50. In Umfangsrichtung ist der Elektromagnet 50 von einem Ringraum 52 umgeben, in den eine oberseitig an den Ventilteller 38 angeformte Führungshülse 54 eintaucht. Die Führungshülse 54 nimmt ein magnetisierbares Element beispielsweise in Form einer Eisenplatte 56 auf, die in der geschlossenen Ventilstellung des Ventiltellers 38 an einer freien Stirnkante 58 des Elektromagneten 50 anliegt und in Kombination mit dem Elektromagneten 50 einen geschlossenen Magnetkreis ausbildet.

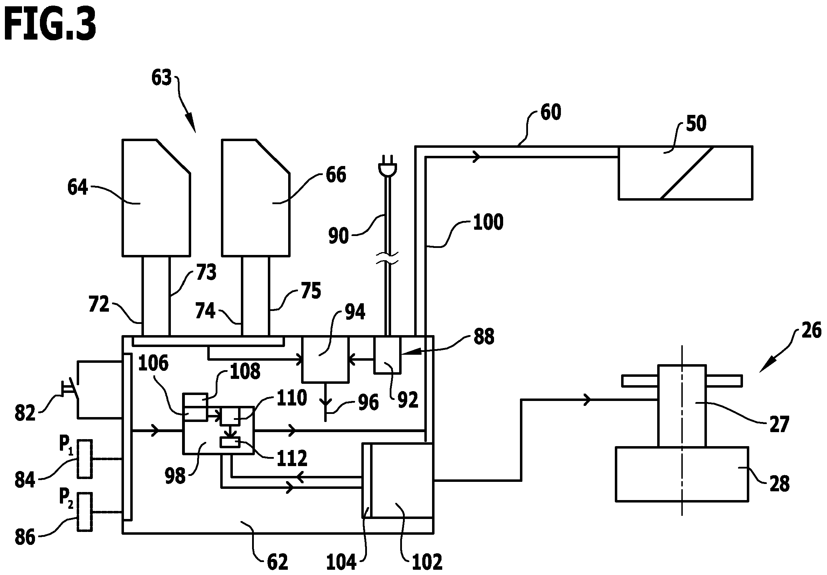

Der Elektromagnet 50 steht über eine Stromversorgungsleitung 60 (Figur 3) mit einer im Saugkopf 14 angeordneten (elektronischen) Steuerungseinrichtung 62 in elektrischer Verbindung. Von der Steuerungseinrichtung 62 wird der Elektromagnet 50 während des normalen Saugbetriebs des Staubsaugers 10 mit einem Versorgungsstrom beaufschlagt. Aufgrund des sich ausbildenden Magnetfelds wird der Ventilteller 38 zuverlässig in seiner Schließstellung gehalten. Die Haltekraft des Elektromagneten 50 wird von der Federkraft der Schließfeder 40 unterstützt.

Wird die Stromversorgung des Elektromagneten 50 von der Steuerungseinrichtung 62 unterbrochen, so entfällt die auf den Ventilteller 38 einwirkende magnetische Haltekraft und der Ventilteller 38 wird aufgrund der auf ihn einwirkenden Druckdifferenz, die sich aus dem Außendruck der im Bereich der Ventilhalterung 36 vorliegenden Fremdluft und dem Innendruck innerhalb der Absaugleitung 24 ergibt, entgegen der Wirkung der Schließfeder 40 vom Ventilsitz abgehoben. Fremdluft kann dann schlagartig durch die Durchgangsöffnungen der Ventilhalterung 36 hindurch in die Absaugleitung 24 einströmen und das Filter 22 wird auf seiner Reinseite 48 schlagartig mit Fremdluft beaufschlagt. Dies führt zu einer mechanischen Erschütterung des Filters 22. Außerdem wird das Filter 22 in Gegenstromrichtung, das heißt entgegen der während des normalen Saugbetriebs herrschenden Strömungsrichtung 30, von Fremdluft durchströmt. Dies hat eine wirkungsvolle Abreinigung des Filters 22 zur Folge.

Die Energieversorgung des Staubsaugers 10 erfolgt bei einem Ausführungsbeispiel mit Hilfe einer wiederaufladbaren Batterieeinrichtung 63. Diese umfasst beispielsweise zwei wiederaufladbare Batterien 64, 66. Die Batterieeinrichtung 63 umfasst beispielsweise einen oder mehrere Lithium-Ionen-Akkumulatoren. Diese sind seitlich neben dem Saugaggregat 26 in einem Batteriefach 68 des Saugkopfes 14 angeordnet. Das Batteriefach 68 ist über eine nach außen schwenkbare Klappe 70 dem Benutzer zum Auswechseln der Batterien 64, 66 zugänglich.

Die elektronische Steuerungseinrichtung 62 ist oberhalb des Saugaggregates 26 im Saugkopf 14 angeordnet und steht über Versorgungsleitungen 72, 73, 74, 75 mit den Batterien 64 und 66 in elektrischer Verbindung. Eingangsseitig ist an die Steuereinrichtung 62 ein vom Benutzer manuell betätigbarer Taster 82 angeschlossen, der an der Oberseite des Saugkopfes 14 angeordnet ist. Durch Betätigen des Tasters 82 kann der Benutzer (manuell) eine Filterabreinigung auslösen.

Die Batterieeinrichtung kann auch eine Lüftereinrichtung zum Kühlen der Batterien 64, 66 umfassen (in der Zeichnung nicht gezeigt). Wenn als Batterien Akkumulatoren verwendet werden, die einer Kühlung bedürfen, dann lässt sich ein akkuschonender Betrieb realisieren. Die Lüftereinrichtung wiederum erhält ihre elektrische Energie zum Betrieb vorzugsweise aus den Batterien 64, 66, wenn ein Batteriebetrieb vorliegt.

Bei einer Ausführungsform ist die elektronische Steuerungseinrichtung 62 an einer Platine angeordnet. An der Platine ist weiterhin eine Aufnahme für die Batterieeinrichtung 63 angeordnet. Die Aufnahme nimmt insbesondere die Batterien 64, 66 auf. Auch eine Lüftereinrichtung der Batterieeinrichtung 63 kann an der Aufnahme angeordnet sein.

Die Steuerungseinrichtung 62 umfasst auch eine Elektronik für die Steuerung und/oder Regelung und/oder Überwachung der Batterieeinrichtung 63. Durch die Steuerungseinrichtung 62, über welche die Elektromotoreinrichtung 25 angesteuert ist, lässt sich beispielsweise die Lüftereinrichtung so steuern, dass diese entsprechend der Ansteuerung der Elektromotoreinrichtung 25 betrieben wird. Beispielsweise wird bei einem Abschalten des Elektromotors 27, welcher durch die Steuerungseinrichtung 62 angesteuert ist, auch die Lüftereinrichtung abgeschaltet (gegebenenfalls mit Zeitverzögerung). Beispielsweise ist es auch möglich, die Lüftereinrichtung abzuschalten, wenn ein Filterabreinigungsbetrieb durchgeführt wird.

Ferner kann dann über die Steuerungseinrichtung 62 eine Steuerung durchgeführt werden, die einen schonenden Betrieb der Batterieeinrichtung 63 erlaubt mit Optimierung auf Maximierung der Batteriekapazität. Beispielsweise lässt sich dann über die Steuerungseinrichtung 62 auch ein Aufladevorgang der Batterieeinrichtung 63 entsprechend steuern oder überwachen. Ferner lässt sich über die Steuerungseinrichtung 62 die "Alterung" der Batterieeinrichtung 63 überwachen.

Bei einer alternativen Ausführungsform erfolgt die Energieversorgung des Staubsaugers 10 über Netzstrom. Bei einer weiteren Ausführungsform ist eine wahlweise Einstellung der Energieversorgung über Netzstrom oder eine Batterieeinrichtung realisiert (siehe unten).

Stromaufwärts (in einer Zuströmung) des Filters 22 ist ein erster Drucksensor 84 und stromabwärts (in einer Abströmung) des Filters 22 ist ein zweiter Drucksensor 86 angeordnet, die an die Steuerungseinrichtung 62 signalwirksam angeschlossen sind und jeweils ein druckabhängiges Steuersignal bereitstellen. Der erste Drucksensor 84 misst einen Druck $p_1$ vor dem Filter 22 gegen die Atmosphäre. Der zweite Drucksensor 86 misst einen Druck $p_2$ nach dem Filter 22 gegen die Atmosphäre. Der Druck $p_2$ ist auch ein Unterdruck, welcher von dem Gebläse 28 erzeugt wird. Mittels der beiden Drucksensoren 84 und 86 kann die sich am Filter 22 einstellende Druckdifferenz $\Delta p = p_1 - p_2$ zwischen einer Zuströmung und einer Abströmung des Filters 22 ermittelt werden.

Wie bereits erwähnt, erfolgt eine Filterabreinigung dadurch, dass die Stromversorgung des Elektromagneten 50 von der Steuereinrichtung 62 kurzzeitig unterbrochen wird.

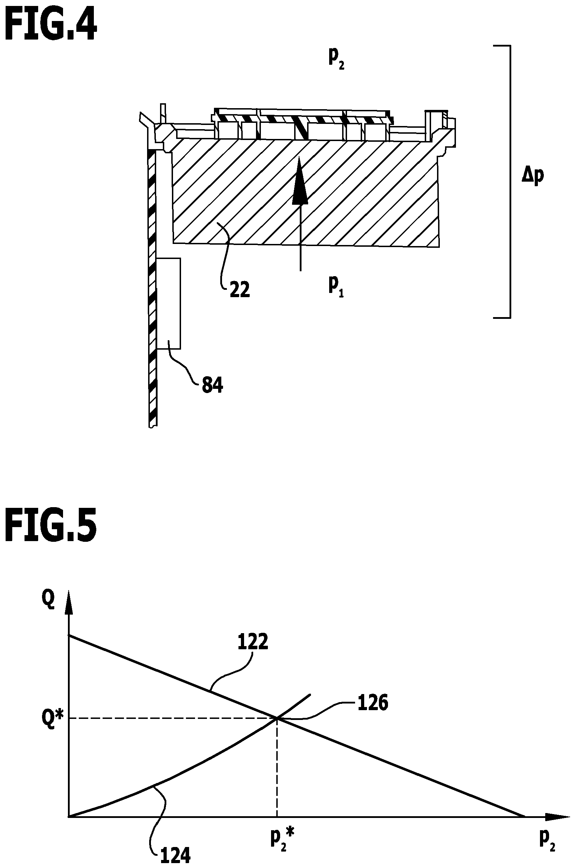

Der zeitliche Verlauf des von der Steuerungseinrichtung 62 dem Elektromagneten 50 bereitgestellten Versorgungsstromes ist in der PCT/EP2011/052039 vom 11. Februar 2011 beschrieben, auf die ausdrücklich und vollinhaltlich Bezug genommen wird: Zu einem Zeitpunkt $t_2$ (siehe Figur 4 in der PCT/EP2011/052039) wird die Stromversorgung des Elektromagneten 50 unterbrochen, sodass das Fremdluftventil 34 ausgehend von seiner geschlossenen Ventilstellung in seine geöffnete Ventilstellung übergeht, und zu einem nachfolgenden Zeitpunkt $t_3$ wird die Stromversorgung des Elektromagneten 50 wieder bereitgestellt, sodass das Fremdluftventil 34 wieder seine geschlossene Ventilstellung einnimmt. Die Unterbrechung der Stromversorgung erfolgt im dargestellten Ausführungsbeispiel dreimal kurz hintereinander, sodass die Reinseite 48 des Filters 22 dreimal hintereinander schlagartig mit Fremdluft beaufschlagt wird, die zu einem großen Teil das Filter 22 in Gegenstromrichtung durchströmt. An der Schmutzseite 32 anhaftende Feststoffpartikel lösen sich dadurch ab. Mit dem Ende der dritten Stromunterbrechung, also zu einem Zeitpunkt $t_E$, ist der Abreinigungsvorgang beendet.

Ein kompletter Abreinigungsvorgang umfasst bei einem solchen Ausführungsbeispiel also drei Öffnungs- und Schließbewegungen des Fremdluftventils kurz hintereinander. Die Länge des Zeitintervalls zwischen den Zeitpunkten $t_2$ und $t_3$ kann beispielsweise 90 Millisekunden betragen. Nach einem Abreinigungsvorgang stellt sich wieder der normale Saugbetrieb ein, in dem der Elektromagnet 50 von der Steuerungseinrichtung 62 mit dem Versorgungsstrom beaufschlagt wird und das Fremdluftventil 34 seine geschlossene Ventilstellung beibehält. Die Saugleistung des Saugaggregats 26 wird während des normalen Saugbetriebs konstant gehalten. Bei zeitgesteuerter Filterabreinigung erfolgt nach einem Saugbetrieb von beispielsweise 15 Sekunden erneut ein Abreinigungsvorgang mit dreimaliger schlagartiger Fremdluftzufuhr, wie dies voranstehend erläutert wurde. Die Länge des Zeitintervalls zwischen zwei Abreinigungsvorgängen ist bevorzugt manuell einstellbar. Alternativ oder ergänzend kann ein Abreinigungsvorgang manuell mittels des Tasters 82 und/oder sensorgesteuert mittels der Drucksensoren 84, 86 ausgelöst werden.

Der Staubsauger 10 umfasst eine Netzspannungsversorgungseinrichtung 88 (Figur 3), über welche wahlweise bzw. einstellbar der Staubsauger 10 mit Netzstrom zur Energieversorgung versorgbar ist. In Figur 3 ist ein zugehöriges Netzkabel mit dem Bezugszeichen 90 angedeutet. Ein Bediener kann dann wählen, ob die Energieversorgung über die Netzspannungsversorgungseinrichtung 88 oder die Batterieeinrichtung 63 erfolgt.

Die Netzspannungsversorgungseinrichtung 88 umfasst einen Gleichrichter 92, welcher an einem Ausgang einen Gleichstrom bzw. eine Gleichspannung bereitstellt.

Die Steuerungseinrichtung 62 weist eine Versorgungs-Untereinheit 94 auf, über welche die Komponenten des Staubsaugers 10 mit elektrischer Energie versorgt werden. Die Versorgungs-Untereinheit 94 stellt die notwendige elektrische Energie über die Stromversorgungsleitung 60 dem Elektromagneten 50 bereit. Sie stellt die elektrische Energie zur Versorgung der Steuerungseinrichtung 62 bereit. Sie stellt die elektrische Energie zur Ansteuerung und Betätigung des Elektromotors 27 bereit. Ein Ausgang (in Figur 3 mit 96 andeutet) liefert die entsprechende elektrische Energie.

Die Versorgungs-Untereinheit 94 kann durch die Batterieeinrichtung 63 gebildet sein bzw. durch die Netzspannungsversorgungseinrichtung 88. Sie kann auch einen Schalter oder dergleichen umfassen, über welchem manuell oder automatisch eingestellt wird, ob die Energieversorgung des Staubsaugers 10 über die wiederaufladbare Batterieeinrichtung 63 erfolgt oder über die Netzspannungsversorgungseinrichtung 88.

Die Steuerungseinrichtung 62 umfasst eine Fremdluftventilansteuerungs-Untereinheit 98. Diese steht in signalwirksamer Verbindung mit dem Taster 82, dem ersten Drucksensor 84 und dem zweiten Drucksensor 86. Diese liefern entsprechende Signale der Fremdluftventilansteuerungs-Untereinheit 98, welche dann über eine Signalleitung 100 den Elektromagneten 50 entsprechend ansteuert. Die Fremdluftventilansteuerungs-Untereinheit 98 steuert den Elektromagneten 50 derart an, dass die auf den Ventilteller 38 einwirkende magnetische Haltekraft gelöst wird, und damit ein Abreinigungsvorgang durchgeführt wird, wenn ein manueller Auslösungsvorgang über den Taster 82 detektiert wird.

Der Elektromotor 27 ist bei einer Ausführungsform ein permanentmagneterregter Synchronmotor. Bei einem permanentmagneterregten Synchronmotor weist der Rotor (Läufer) eine Mehrzahl von Permanentmagneten auf. Ein Stator ist mit Spulen versehen, welche durch die Steuerungseinrichtung 62 angesteuert werden. Die Ansteuerung erfolgt dabei derart, dass eine elektronische Kommutierung erfolgt. Dazu weist die Steuerungseinrichtung 62 (mindestens) einen Kontroller 102 auf, welcher den Elektromotor 27 und dabei insbesondere die Spulen im Stator des Elektromotors 27 entsprechend ansteuert.

Die Ansteuerung des Elektromotors 27 durch den Kontroller 102 erfolgt insbesondere über pulsweitenmodulierte Signale. Es wird dadurch dem Elektromotor 27 die entsprechende Energie mit Steuersignalen bereitgestellt.

Der Elektromotor 27 ist insbesondere ein bürstenloser Permanentmagnetmotor (EC-Motor). Durch einen solchen Motor lassen sich bei hohem Wirkungsgrad und auch geringer Geräuschentwicklung Umdrehungen von beispielsweise 20 000 U/min oder mehr erreichen. (Auch kleinere Drehzahlen sind erreichbar.)

Bei einem Ausführungsbeispiel ist der Elektromotor ein Drei-Phasen-Motor und insbesondere permanentmagneterregter Drei-Phasen-Synchronmotor. Es kann auch vorgesehen sein, dass der permanentmagneterregte Synchronmotor als Elektromotor 27 nur einphasig oder zweiphasig ist.

Die Steuerungseinrichtung 62 umfasst bei einer Ausführungsform eine Motoransteuerungs-Untereinheit 104, welche insbesondere Teil des Kontrollers 102 ist, und welche in signalwirksamer Verbindung mit der Fremdluftventilansteuerungs-Untereinheit 98 steht. Es kann dabei grundsätzlich eine unidirektionale Verbindung vorgesehen sein, bei welcher entweder die Fremdluftventilansteuerungs-Untereinheit 98 entsprechende Signale, die charakterisieren, ob eine Abreinigung durchgeführt wird oder nicht, der Motoransteuerungs-Untereinheit 104 bereitstellt, oder die Motoransteuerungs-Untereinheit 104 der Fremdluftventilansteuerungs-Untereinheit 98 Signale bezüglich der Motoransteuerung des Elektromotors 27 bereitstellt. Es kann auch eine bidirektionale Datenverbindung vorhanden sein, bei der Motoransteuerungsdaten und Fremdluftventilansteuerungsdaten zwischen der Fremdluftventilansteuerungs-Untereinheit 98 und der Motoransteuerungs-Untereinheit 104 ausgetauscht werden.

Es ist dadurch möglich, in der Motoransteuerung direkt eine entsprechende Fremdluftventilansteuerung zu berücksichtigen. Alternativ oder zusätzlich ist es möglich, in der Fremdluftventilansteuerung Motoransteuerungsdaten zu berücksichtigen.

Der Staubsauger 10 umfasst ferner eine Ermittlungseinrichtung 106, welche eine einen Volumenstrom an Saugluft charakterisierende Größe Q ermittelt, wobei diese den Volumenstrom charakterisierende Größe Q in der Abströmung des Filters 22 ermittelt wird.

Es kann grundsätzlich vorgesehen sein, dass ein Volumenstromsensor in der Abströmung des Filters 22 angeordnet ist und dann insbesondere der Volumenstrom Q direkt gemessen wird.

Bei einem Ausführungsbeispiel ist die Ermittlungseinrichtung 106 in die Steuerungseinrichtung 98 integriert. Sie ermittelt aus einer Kennlinie des Gebläses 28 bzw. aus einem diese Kennlinie annähernden Zusammenhang die den Volumenstrom charakterisierende Größe Q. Dies wird untenstehend noch näher erläutert.

Die Steuerungseinrichtung 98 umfasst ferner eine Speichereinrichtung 108, in welcher Daten für die Kennlinie bzw. den die Kennlinie annähernden Zusammenhang gespeichert sind.

Ferner umfasst die Steuerungseinrichtung 98 eine Auswertungseinrichtung 110. Die Auswertungseinrichtung ermittelt aus den der Steuerungseinrichtung übermittelten Daten des ersten Drucksensors 84 und des zweiten Drucksensors 86 und ferner aus den durch die Ermittlungseinrichtung 106 bereitgestellten Daten eine Größe, welche charakteristisch ist für den Strömungswiderstand des Filters 22.

Die Steuerungseinrichtung 98 umfasst ferner eine Schwellenwertprüfungseinrichtung 112. Diese Schwellenwertprüfungseinrichtung 112 erhält Daten von der Auswertungseinrichtung 110 und prüft, ob eine ermittelte, für den Strömungswiderstand des Filters 22 charakteristische Größe einen Schwellenwert überschreitet oder nicht, und es wird dann, wenn der Schwellenwert überschritten wird, eine Filterabreinigung initiiert, indem ein entsprechendes Steuersignal an den Elektromagnet 50 übermittelt wird.

Die Steuerung der Filterabreinigung funktioniert wie folgt:

In Figur 7 sind schematisch die Druckverhältnisse längs eines Strömungswegs für Saugluft an dem Staubsauger 10 gezeigt. Die Drücke sind dabei bezogen auf einen Atmosphärendruck, wobei in Figur 7 Unterdrücke gegenüber der Atmosphäre (welche zu einem Saugstrom führen) mit positivem Vorzeichen eingezeichnet sind. Figur 7 dient zur qualitativen Erläuterung der Druckverhältnisse.

In Figur 7 ist ein Beispielfall für eine starke Verschmutzung des Filters 22 mit durchbrochenen Linien gezeigt (Bezugszeichen 114) und ein Beispielfall für weniger starke Verschmutzung (Zusetzung) des Filters 22 mit durchgezogenen Linien (Bezugszeichen 116).

Das Gebläse 28 des Saugaggregats 26 erzeugt, angetrieben durch den Elektromotor 27, einen Saugstrom. Gegenüber dem atmosphärischen Druck wird ein Unterdruck 118 erzeugt. Dieser Unterdruck 118 steht in der Absaugleitung 24 an.

Zwischen dem Gebläse 28 und den Abluftöffnungen 29 steigt der Druck auf den atmosphärischen Druck an.

Der erwähnte Unterdruck 118 in der Absaugleitung 24 liegt zwischen dem Gebläse 28 und dem Filter 22 an, wobei er aufgrund des Strömungswegs abfallen kann (in dem Sinne, dass sein Betrag abfällt).

Stromabwärts des Filter 22, das heißt in der Abströmung des Filters 22, liegt der Druck $p_2$, welcher durch den zweiten Drucksensor 86 gemessen wird. Der Druck $p_2$ ist ein gutes Maß für den Unterdruck 118 in der Absaugleitung 24.

Stromaufwärts des Filters 22, das heißt an der Zuströmung des Filters 22, herrscht der Druck $p_1$, welcher durch den ersten Drucksensor 84 gemessen wird. Über das Filter 22 liegt ein Druckabfall $\Delta p = p_1 - p_2$ vor. Je stärker das Filter zugesetzt ist, desto größer ist dieser Druckabfall $\Delta p$.

Zwischen der Zuströmung des Filters 22 und dem Saugeinlass 16 erfolgt ein weiterer Druckabfall. In dem Saugschlauch 18 erfolgt ebenfalls ein Druckabfall. An einer Düse 120, welche an den Saugschlauch 18 angeschlossen ist, erfolgt ebenfalls ein Druckabfall. Außerhalb der Düse 120 herrscht dann wieder atmosphärischer Druck.

Der Druckabfall in dem Filter 22 ist, wie durch Vergleich der Kurven 114 und 116 in Figur 7 erkennbar ist, abhängig von der Zusetzung des Filters. Der Druckverlauf im weiteren Strömungsweg hängt dabei auch davon ab, inwieweit das Filter 22 verschmutzt ist.

Grundsätzlich ist der Druckabfall $\Delta p$ über das Filter 22 neben der Verschmutzung des Filters 22 auch abhängig von dem restlichen Strömungspfad in dem Staubsauger 10.

Bei der erfindungsgemäßen Lösung wird bezüglich der Steuerung der Filterabreinigung auch ein Volumenstrom Q der Saugluft in der Absaugleitung 24 berücksichtigt.

Grundsätzlich kann dabei, wie oben erwähnt, durch einen entsprechenden Sensor dieser Volumenstrom direkt gemessen werden. Bei einem konstruktiv einfachen Ausführungsbeispiel wird der Volumenstrom rechnerisch ermittelt: Bezüglich des Drucks (Unterdrucks) 118 in der Absaugleitung 24 hat das Gebläse 28 eine Kennlinie.

Wie oben erwähnt, ist der durch den zweiten Drucksensor 86 gemessene Druck $p_2$ ein geeignetes Maß für den Druck 118 der Absaugleitung 24.

In Figur 5 ist mit dem Bezugszeichen 122 ein Ausführungsbeispiel einer Kennlinie des Gebläses 28 in Abhängigkeit des Drucks $p_2$ gezeigt. Für kleine Drücke $p_2$ (kleine Drücke 118) ist der Volumenstrom hoch und je höher der Druck $p_2$ wird, das heißt je mehr er sich dem Atmosphärendruck annähert, desto kleiner wird der Volumenstrom.

Für (zumindest manche) kommerziell erhältliche Gebläse 28 hat die Kennlinie 122 einen zumindest näherungsweise linearen Verlauf.

Es hat sich gezeigt, dass zur Durchführung des erfindungsgemäßen Verfahrens, auch wenn die Kennlinie keinen linearen Verlauf hat, üblicherweise eine lineare Annäherung ausreichend ist.

Der Staubsauger selber hat eine Kennlinie 124 bezüglich der Abhängigkeit des Volumenstroms von dem Druck 118. Diese Kennlinie 124 hängt ab von dem gesamten Strömungspfad des Staubsaugers 10 einschließlich Saugschlauch 18 und Düse 120. Bei kleinen Drücken $p_2$ ist der Volumenstrom niedrig und durch Druckerhöhung erhöht sich der Volumenstrom.

Beim Betrieb des Staubsaugers 10 stellt sich ein Druck $p_2^*$ mit einem Volumenstrom $Q^*$ ein, an welchem die Kennlinie 124 die Kennlinie 122 schneidet. Dieser entsprechende Punkt 126 kann während des Betriebs variieren. Er hängt grundsätzlich von der Ausbildung des Strömungspfads ab, und beispielsweise auch, welche Länge und welchen Durchmesser der Saugschlauch 18 hat und wie die Düse 120 ausgebildet ist. Er kann auch mit der Beschaffenheit der Fläche variieren, auf welche die Düse 120 wirkt.

Wie aus Figur 5 ersichtlich ist, kann, wenn der Druck 118 bekannt ist, aus der Kennlinie 122 der Volumenstrom zumindest als den Volumenstrom charakterisierende Größe Q (als eine Näherung für den Volumenstrom) ermittelt werden. Der Druck $p_2$ wird über den zweiten Drucksensor 86 ermittelt.

Die Kennlinie 122 bzw. diese annähernder Zusammenhang ist beispielsweise als Wertetabelle in der Speichereinrichtung 108 gespeichert. Dazu wurde die Kennlinie zuvor aufgenommen und dort abgespeichert.

Aus den gemessenen Werten $p_1$ und $p_2$ lässt sich der Druckabfall $\Delta p = p_1 - p_2$ an dem Filter 22 bestimmen. Ferner ist aus dem Druck $p_2$ und der Kennlinie 122 der Volumenstrom Q in der Absaugleitung 24, das heißt in der Abströmung des Filters 22 mindestens näherungsweise bekannt. Daraus wiederum ermittelt dann die Auswertungseinrichtung 110 eine den Strömungswiderstand des Filters 22 charakterisierende Größe. Diese den Strömungswiderstand charakterisierende Größe wird insbesondere als Quotient der Druckdifferenz $\Delta p$ und einer Funktion des ermittelten Volumenstroms ermittelt.

Bei einem Ausführungsbeispiel wird ein Verlustbeiwert des Filters 22 berechnet als

$$c_W = \frac{\Delta p}{Q^2} \qquad\qquad (1)$$

In diesen Verlustbeiwert des Filters 22 geht der ermittelte Volumenstrom (bzw. die den Volumenstrom charakterisierende Größe Q) in der zweiten Potenz ein.

In Gleichung (1) ist ein eventueller Proportionalitätsfaktor nicht angegeben. In der Schwellenwertprüfungseinrichtung 112 wird geprüft, ob die nach Gleichung (1) bestimmte Größe einen vorgegebenen Schwellenwert überschreitet oder nicht. Da es bei dieser Schwellenwertprüfung auf einen eventuellen Faktor nicht ankommt (der dann im Schwellenwert ja auch enthalten wäre), wurde dieser in Gleichung (1) weggelassen.

Ein oder mehrere Schwellenwerte, gegenüber welchen die Prüfung stattfindet, wurden zuvor bestimmt und sind insbesondere in der Speichereinrichtung 108 gespeichert.

Wenn die Prüfung ergibt, dass der vorgegebene Schwellenwert durch die nach Gleichung (1) berechnete, den Strömungswiderstand charakterisierende Größe $c_W$ überschritten wird, dann wird ein Filterabreinigungsvorgang eingeleitet, indem die Steuerungseinrichtung 108 ein entsprechendes Ansteuerungssignal an den Elektromagnet 50 sendet.

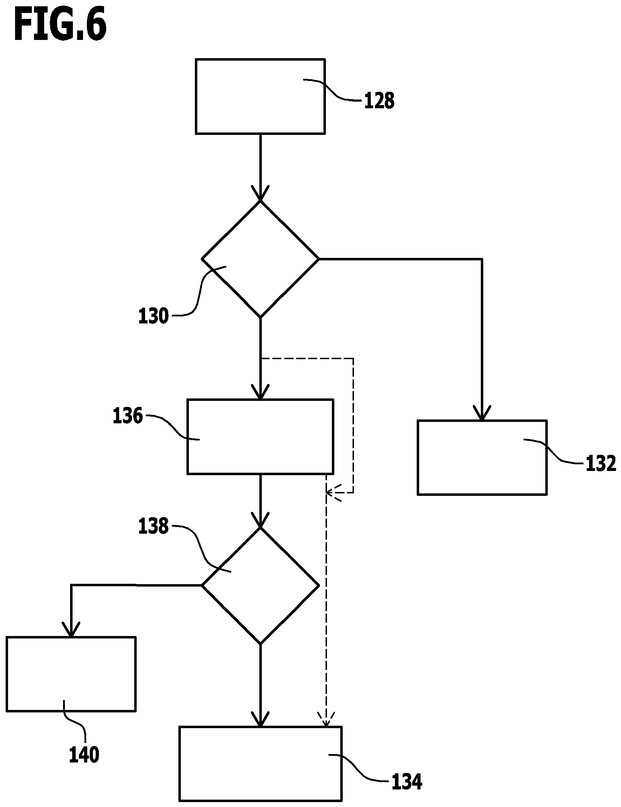

In Figur 6 ist der Ablauf schematisch gezeigt:

Es wird zunächst nach Gleichung (1) in einem Berechnungsschritt 128 in der Auswertungseinrichtung 110 der Steuerungseinrichtung 98 die den Strömungswiderstand des Filters 22 charakterisierende Größe $c_W$ berechnet.

In einem Schwellenwertprüfungsschritt 130 wird dann geprüft, ob der vorgegebene Schwellenwert (und insbesondere ein vorgegebener erster Schwellenwert) überschritten ist oder nicht. Wenn der Schwellenwert nicht überschritten worden ist, dann wird der normale Saugvorgang fortgesetzt bzw. weitergeführt (Bezugszeichen 132 in Figur 6).

Wenn die Überprüfung ergibt, dass der Schwellenwert überschritten worden ist, dann wird ein Abreinigungsvorgang durchgeführt (Bezugszeichen 134 in Figur 6).

Es kann dabei vorgesehen sein, dass in einem weiteren Überprüfungsverfahren überprüft wird, ob ein "Filterproblem" besteht, und ob beispielsweise das Filter 22 ausgetauscht werden muss.

Dazu wird überprüft, ob der erste Schwellenwert innerhalb einer bestimmten Zeitspanne mehrmals überschritten wird oder ob beispielsweise ein zweiter Schwellenwert oberhalb des ersten Schwellenwerts überschritten wird.

Beispielsweise wird in einem Speicherschritt 136 nach dem Ergebnis, dass der Schwellenwert überschritten worden ist, eben dieses Ergebnis gespeichert.

In einem weiteren Überprüfungsschritt 138 wird überprüft, ob innerhalb einer bestimmten Zeitspanne bereits eine bestimmte Anzahl des Überschreitens des Schwellenwerts erreicht wurde. Wenn dies nicht der Fall ist, dann wird der Abreinigungsvorgang 134 durchgeführt.

Wenn der Überprüfungsschritt 138 ergibt, dass innerhalb der bestimmten Zeitspanne auch in einer bestimmten Anzahl mehrmals der Schwellenwert überschritten wurde, dann deutet dies auf ein Filterproblem hin und es wird beispielsweise eine entsprechende Warnanzeige 140 ausgegeben.

Bei einem Ausführungsbeispiel steuert dann die Steuerungseinrichtung 98 eine Warnanzeige (Figur 3) an, welche insbesondere an einem Gehäuse des Staubsaugers 10 angeordnet ist. Die Warnanzeige kann beispielsweise eine optische und/oder akustische Warnanzeige sein.

Wenn der Überprüfungsschritt 138 ergeben hat, dass vorherige Filterabreinigungsvorgänge nicht erfolgreich waren, dann deutet dies auf Filterprobleme hin; durch den Überprüfungsschritt 138 lässt sich ermitteln, ob sich das Filter 22 durch Abreinigungsvorgänge erholt oder nicht mehr erholt. Wenn diese Überprüfung ergibt, dass eine solche Erholung nicht mehr erfolgt, dann muss beispielsweise eine besondere Reinigung durchgeführt werden bzw. das Filter 22 ausgetauscht werden.

Es ist beispielsweise auch möglich, dass in dem Überprüfungsschritt 138 überprüft wird, nachdem der erste Schwellenwert erreicht wurde, ob der zweite Schwellenwert, welcher höher als der erste Schwellenwert ist, überschritten wird als Maß, ob eine Erholung erfolgt ist oder nicht.

Durch die erfindungsgemäße Lösung erfolgt eine bedarfsgerechte Filterabreinigung in Abhängigkeit von den herrschenden Verhältnissen an dem Filter 22. Es wird dabei der Druckverlust $\Delta p$ über das Filter 22 erfasst. Darüber hinaus wird auch der Volumenstrom Q mindestens näherungsweise erfasst, um so die Verhältnisse an dem Filter 22 unabhängig von dem restlichen Strömungspfad des Staubsaugers 10 ermitteln zu können. Dazu wird zusätzlich zu dem Druckverlust $\Delta p$, gemessen über die Druckwerte $p_1$ und $p_2$ des ersten Drucksensors 84 und des zweiten Drucksensors 86 der Volumenstrom Q in der Absaugleitung 24 mindestens näherungsweise ermittelt. Dieser wiederum wird aus der Kennlinie 122 des Gebläses 28 ermittelt. Die Kennlinie 122 ist in der Speichereinrichtung 108 beispielsweise als Wertetabelle abgespeichert bzw. es ist ein diese Kennlinie 122 annähernden Zusammenhang dort abgespeichert. Aus dem gemessenen Druck $p_2$ wird eine den Volumenstrom charakterisierende Größe Q ermittelt und dadurch wiederum wird über die Gleichung (1) eine den Strömungswiderstand am Filter 22 charakterisierende Größe $c_W$ ermittelt. Dadurch lassen sich mit guter Genauigkeit die "Zusetzungsverhältnisse" am Filter 22 direkt ermitteln.

Es lässt sich direkt ein Verlustbeiwert $c_W$ des Filters 22 bzw. eine zu dem Verlustbeiwert $c_W$ proportionale Größe bestimmen, wobei diese Größe auch bei Betriebsvariationen bzw. Betriebsschwankungen des Staubsaugers 10 mit ausreichender Genauigkeit bestimmbar ist.

Mögliche Beeinflussungen für die Druckdifferenz $\Delta p$ im Strömungspfad, die nicht auf eine Filterverschmutzung zurückzuführen sind (wie beispielsweise eine Verstopfung des Saugschlauchs 18, die Verwendung eines anderen Zubehörs wie einer Düse 120 usw.), werden durch die erfindungsgemäße Lösung automatisch berücksichtigt, da für die Durchführung einer Filterabreinigung auch der Volumenstrom in der Absaugleitung 24 berücksichtigt wird.

Das erfindungsgemäße Verfahren lässt sich auf konstruktiv einfache Weise realisieren.

Die Staubsaugvorrichtung kann auch in eine Bodenreinigungsmaschine wie beispielsweise eine selbstfahrende Kehrmaschine integriert sein.

**Bezugszeichenliste**

| | |
|---|---|
| 10 | Staubsauger |
| 12 | Schmutzsammelbehälter |
| 14 | Saugkopf |
| 16 | Saugeinlass |
| 18 | Saugschlauch |

| 20 | Saugauslass |
|---|---|
| 21 | Filtereinrichtung |
| 22 | Filter |
| 24 | Absaugleitung |
| 25 | Elektromotoreinrichtung |
| 26 | Saugaggregat |
| 27 | Elektromotor |
| 28 | Gebläse |
| 29 | Abluftöffnung |
| 30 | Saugströmung |
| 32 | Schmutzseite |
| 33 | Fremdluftventileinrichtung |
| 34 | Fremdluftventil |
| 36 | Ventilhalterung |
| 38 | Ventilteller |
| 40 | Schließfeder |
| 42 | Filterhalterung |
| 44 | Anschlagfeder |
| 46 | Seitliche Öffnung |
| 48 | Reinseite |
| 50 | Elektromagnet |
| 52 | Ringraum |
| 54 | Führungshülse |
| 56 | Eisenplatte |
| 58 | Stirnkante |
| 60 | Stromversorgungsleitung |
| 62 | Steuerungseinrichtung |
| 63 | Batterieeinrichtung |
| 64 | Batterie |
| 66 | Batterie |
| 68 | Batteriefach |
| 70 | Klappe |
| 72 | Versorgungsleitung |
| 73 | Versorgungsleitung |
| 74 | Versorgungsleitung |
| 75 | Versorgungsleitung |
| 82 | Taster |
| 84 | Erster Drucksensor |
| 86 | Zweiter Drucksensor |
| 88 | Netzspannungsversorgungseinrichtung |
| 90 | Netzkabel |
| 92 | Gleichrichter |
| 94 | Versorgungs-Untereinheit |
| 96 | Ausgang |
| 98 | Fremdluftventilansteuerungs-Untereinheit |
| 100 | Signalleitung |
| 102 | Kontroller |
| 104 | Motoransteuerungs-Untereinheit |
| 106 | Ermittlungseinrichtung |
| 108 | Speichereinrichtung |
| 110 | Auswertungseinrichtung |
| 112 | Schwellenwertprüfungseinrichtung |
| 114 | "starke Verschmutzung" |
| 116 | "weniger starke Verschmutzung" |
| 118 | Unterdruck |
| 120 | Düse |
| 122 | Kennlinie Gebläse |
| 124 | Kennlinie Staubsauger |

126 Punkt
128 Berechnungssensor
130 Schwellenwertprüfungssensor
132 Saugvorgang
134 Abreinigungsvorgang
136 Speicherwert
138 Überprüfungssensor
140 Warnanzeige
142 Warnanzeige

**Patentansprüche**

1.  Verfahren zum Abreinigen eines Filters (22) einer Staubsaugvorrichtung, wobei im Betrieb der Staubsaugvorrichtung das Filter (22) von Saugluft durchströmt wird, welche durch ein Gebläse (28) erzeugt wird, umfassend:

    - Messung eines ersten Drucks ($p_1$) an einer Zuströmung des Filters (22);
    - Messung eines zweiten Drucks ($p_2$) an einer Abströmung des Filters (22);
    - Ermittlung eines Druckabfalls ($\Delta p$) an dem Filter (22) als Druckdifferenz zwischen dem ersten Druck ($p_1$) und dem zweiten Druck ($p_2$);
    - Ermittlung einer einen Volumenstrom der Saugluft in der Abströmung des Filters (22) charakterisierenden Größe (Q);

    **gekennzeichnet durch**

    - Ermittlung einer einen Strömungswiderstand des Filters (22) charakterisierenden Größe ($c_W$) aus der Druckdifferenz ($\Delta p$) und der den Volumenstrom charakterisierenden Größe (Q); und
    - Einleitung einer Filterabreinigung in Abhängigkeit von der ermittelten den Strömungswiderstand des Filters charakterisierenden Größe ($c_W$).

2.  Verfahren nach Anspruch 1, **dadurch gekennzeichnet, dass** die ermittelte den Strömungswiderstand charakterisierende Größe ($c_W$) mit einem Schwellenwert verglichen wird, und wenn diese Größe ($c_W$) oberhalb des Schwellenwerts liegt, eine Filterabreinigung eingeleitet wird, und insbesondere, dass der Schwellenwert vorgegeben ist oder wird.

3.  Verfahren nach einem der vorangehenden Ansprüche, **dadurch gekennzeichnet, dass** die den Volumenstrom charakterisierende Größe (Q) aus einer Kennlinie des Gebläses (28) ermittelt wird, welche eine Abhängigkeit des Volumenstroms (Q) von einem Druck ($p_2$) in der Abströmung des Filters angibt, und insbesondere, dass der zweite Druck ($p_2$) als Maß für den Druck in der Abströmung des Filters (22) genommen wird, und insbesondere, dass die Kennlinie (122) oder ein diese annähernder Zusammenhang zuvor ermittelt wurde und in einer Speichereinrichtung (108) gespeichert ist und insbesondere als Wertetabelle gespeichert ist.

4.  Verfahren nach einem der vorangehenden Ansprüche, **dadurch gekennzeichnet, dass** die den Strömungswiderstand charakterisierende Größe ($c_W$) als Quotient aus der ermittelten Druckdifferenz ($\Delta p$) und einer Funktion der ermittelten den Volumenstrom charakterisierenden Größe (Q) bestimmt wird, und insbesondere, dass der Quotient aus der ermittelten Druckdifferenz ($\Delta p$) und einer Potenz der ermittelten den Volumenstrom charakterisierenden Größe (Q) berechnet wird und insbesondere die Potenz die zweite Potenz ist.

5.  Verfahren nach einem der Ansprüche 2 bis 4, **dadurch gekennzeichnet, dass** geprüft wird, ob der Schwellenwert innerhalb einer bestimmten Zeitspanne mehrmals überschritten wird.

6.  Verfahren nach einem der Ansprüche 2 bis 5, **dadurch gekennzeichnet, dass** geprüft wird, ob nach Überschreiten des Schwellenwerts, welcher ein erster Schwellenwert ist, ein zweiter Schwellenwert überschritten wird, welcher größer ist als der erste Schwellenwert, und insbesondere, dass ein Warnsignal ausgegeben wird, wenn der Schwellenwert in der bestimmten Zeitspanne mit einer Mindestanzahl überschritten wird und/oder der zweite Schwellenwert überschritten wird.

7.  Verfahren nach einem der vorangehenden Ansprüche, **dadurch gekennzeichnet, dass** zur Durchführung einer Filterabreinigung das Filter (22) mit Fremdluft beaufschlagt wird, und insbesondere, dass eine Fremdluftventileinrichtung (33) angesteuert wird und für eine Filterabreinigung eine geschlossene Ventilstellung in eine offene Ventilstellung gebracht wird.

8. Staubsaugvorrichtung, umfassend einen Saugeinlass (16), einen Schmutzsammelbehälter (12), eine Filtereinrichtung (21) mit mindestens einem Filter (22), ein Saugaggregat (26) mit einem Gebläse (28), wobei der Schmutzsammelbehälter (12) über die Filtereinrichtung (21) mit dem Saugaggregat (26) in Strömungsverbindung steht, eine Abreinigungseinrichtung (33) für die Filtereinrichtung (21), einen ersten Drucksensor (84), welcher einen ersten Druck ($p_1$) in einer Zuströmung der Filtereinrichtung (21) ermittelt, einen zweiten Drucksensor (86), welcher einen zweiten Druck ($p_2$) in einer Abströmung der Filtereinrichtung (21) ermittelt, eine Steuerungseinrichtung (98), welche die Abreinigungseinrichtung (33) ansteuert und welche signalwirksam mit dem ersten Drucksensor (84) und dem zweiten Drucksensor (86) verbunden ist, und eine Ermittlungseinrichtung (106), welche eine einen Volumenstrom an Saugluft an der Filtereinrichtung charakterisierende Größe (Q) ermittelt, **dadurch gekennzeichnet, dass** die Steuerungseinrichtung (98) eine Auswertungseinrichtung (110) umfasst, welche aus einer Druckdifferenz ($\Delta p$) zwischen dem ersten Druck ($p_1$) und dem zweiten Druck ($p_2$) und der den Volumenstrom charakterisierenden Größe (Q) eine einen Strömungswiderstand der Filtereinrichtung charakterisierende Größe ($c_W$) ermittelt, und dass die Steuerungseinrichtung (98) eine Schwellenwertprüfungseinrichtung (112) umfasst, welche prüft, ob die ermittelte den Strömungswiderstand charakterisierende Größe ($c_W$) oberhalb eines Schwellenwerts liegt und in diesem Falle einen Filterabreinigungsvorgang durch Ansteuerung der Abreinigungseinrichtung (33) initiiert.

9. Staubsaugvorrichtung nach Anspruch 8, **dadurch gekennzeichnet, dass** die Steuerungseinrichtung (98) eine Speichereinrichtung (108) umfasst, in welcher eine Kennlinie (122) des Gebläses (28) oder ein diese annähernder Zusammenhang gespeichert ist, wobei die Kennlinie (122) die Abhängigkeit des Volumenstroms (Q) von einem Druck ($p_2$) in der Abströmung der Filtereinrichtung (21) angibt.

10. Staubsaugvorrichtung nach Anspruch 9, **dadurch gekennzeichnet, dass** die Ermittlungseinrichtung (106) in die Steuerungseinrichtung (98) integriert ist und die den Volumenstrom charakterisierende Größe (Q) aus der Kennlinie (122) oder dem diese annähernden Zusammenhang ermittelt.

11. Staubsaugvorrichtung nach einem der Ansprüche 8 bis 10, **gekennzeichnet durch** eine Warnanzeige (142), welche einen Filterzustand anzeigt, und welche durch die Steuerungseinrichtung (98) angesteuert ist.

12. Staubsaugvorrichtung nach einem der Ansprüche 8 bis 11, **dadurch gekennzeichnet, dass** die Abreinigungseinrichtung als Fremdluftventileinrichtung (33) ausgebildet ist, wobei die Filtereinrichtung (21) über die Fremdluftventileinrichtung (33) mit Fremdluft beaufschlagbar ist und insbesondere die Fremdluftventileinrichtung (33) zur Abreinigung der Filtereinrichtung (21) aus einer geschlossenen in eine offene Ventilstellung bringbar ist und wieder zurück von der geöffneten Ventilstellung in eine geschlossene Ventilstellung bringbar ist.

13. Staubsaugvorrichtung nach einem der Ansprüche 8 bis 12, **gekennzeichnet durch** eine Ausbildung als Stand-alone-Gerät (10).

14. Staubsaugvorrichtung nach einem der Ansprüche 8 bis 12, **gekennzeichnet durch** eine Integration in eine Bodenreinigungsmaschine.

15. Staubsaugvorrichtung nach einem der Ansprüche 8 bis 14, **dadurch gekennzeichnet, dass** im Betrieb der Staubsaugvorrichtung das Verfahren gemäß einem der Ansprüche 1 bis 13 durchgeführt ist.

## Claims

1. Method for cleaning a filter (22) of a vacuum cleaning apparatus, wherein in operation of the vacuum cleaning apparatus the filter (22) has suction air flowing therethrough, said suction air being generated by a fan (28), the method comprising:

   - measuring a first pressure ($p_1$) at an inflow section of the filter (22);
   - measuring a second pressure ($p_2$) at an outflow section of the filter (22);
   - determining a pressure drop ($\Delta p$) at the filter (22) as a pressure difference between the first pressure ($p_1$) and the second pressure ($p_2$);

- determining a quantity (Q) characterizing a volume flow of the suction air in the outflow section of the filter (22);

**characterized by**

- determining, from the pressure difference ($\triangle$p) and the quantity (Q) that characterizes the volume flow, a quantity ($c_W$) characterizing a flow resistance of the filter (22); and
- initiating a filter cleaning operation in dependence upon the determined quantity ($c_W$) that characterizes the flow resistance of the filter.

2. Method in accordance with claim 1, **characterized in that** the determined quantity ($c_W$) that characterizes the flow resistance is compared with a threshold value, and if said quantity ($c_W$) is above the threshold value, a filter cleaning operation is initiated, and **characterized in** particular **in that** the threshold value is or will be predetermined.

3. Method in accordance with any one of the preceding claims, **characterized in that** the quantity (Q) characterizing the volume flow is determined from a characteristic curve of the fan (28) which indicates a dependence of the volume flow (Q) on a pressure ($p_2$) in the outflow section of the filter, and **characterized in** particular **in that** the second pressure ($p_2$) is taken to be a measure of the pressure in the outflow section of the filter (22), and **characterized in** particular **in that** the characteristic curve (122) or a relationship approximating it was previously determined and is stored in a storage device (108) and is stored in particular as a table of values.

4. Method in accordance with any one of the preceding claims, **characterized in that** the quantity ($c_W$) characterizing the flow resistance is determined as the quotient of the determined pressure difference ($\triangle$p) and a function of the determined quantity (Q) that characterizes the volume flow, and **characterized in** particular **in that** the quotient is calculated from the determined pressure difference ($\triangle$p) and a power of the determined quantity (Q) that characterizes the volume flow and **in that** the power is in particular the second power.

5. Method in accordance with any one of claims 2 to 4, **characterized in that** a test is performed as to whether the threshold value is exceeded multiple times within a specified period of time.

6. Method in accordance with any one of claims 2 to 5, **characterized in that** a test is performed to determine if, after the exceeding of a threshold value which is a first threshold value, a second threshold value is exceeded, said second threshold value being greater than the first threshold value, and **characterized in** particular **in that** a warning signal is output if the threshold value is exceeded a minimum number of times within the specified time period and/or if the second threshold value is exceeded.

7. Method in accordance with any one of the preceding claims, **characterized in that** the filter (22) has external air admitted thereto for carrying out a filter cleaning operation, and **characterized in** particular **in that** an external air valve device (33) is controlled and, for cleaning the filter, brought from a closed valve position to an open valve position.

8. Vacuum cleaning apparatus, comprising a suction inlet (16), a dirt collection container (12), a filter device (21) having at least one filter (22), a suction unit (26) having a fan (28), wherein the dirt collection container (12) is in flow communication with the suction unit (26) via the filter device (21), a filter cleaning device (33) for the filter device (21), a first pressure sensor (84) which determines a first pressure ($p_1$) in an inflow section of the filter device (21), a second pressure sensor (86) which determines a second pressure ($p_2$) in an outflow section of the filter device (21), a control device (98) which controls the filter cleaning device (33) and is operatively connected for signal communication with the first pressure sensor (84) and the second pressure sensor (86), and a determination device (106) which determines a quantity (Q) characterizing a volume flow of suction air at the filter device, **characterized in that** the control device (98) comprises an evaluation device (110) which determines, from a pressure difference ($\triangle$p) between the first pressure ($p_1$) and the second pressure ($p_2$) and the quantity (Q) characterizing the volume flow, a quantity ($c_W$) that characterizes a flow resistance of the filter device, and **characterized in that** the control device (98) comprises a threshold value test device (112) which tests whether the determined quantity ($c_W$) that characterizes the flow resistance is above a threshold value and if so, initiates a filter cleaning operation by controlling the filter cleaning device (33).

9. Vacuum cleaning apparatus in accordance with claim 8, **characterized in that** the control device (98) comprises a storage device (108) in which is stored a characteristic curve (122) of the fan (28) or a relationship approximating it, wherein the characteristic curve (122) indicates the dependence of the volume flow (Q) on a pressure ($p_2$) in the outflow section of the filter device (21).

**10.** Vacuum cleaning apparatus in accordance with claim 9, **characterized in that** the determination device (106) is integrated in the control device (98) and determines the quantity (Q) characterizing the volume flow from the characteristic curve (122) or from the relationship approximating it.

**11.** Vacuum cleaning apparatus in accordance with any one of claims 8 to 10, **characterized by** a warning indication (142) which indicates a filter status and which is controlled by the control device (98).

**12.** Vacuum cleaning apparatus in accordance with any one of claims 8 to 11, **characterized in that** the filter cleaning device is configured as an external air valve device (33), wherein the filter device (21) is capable of having external air admitted thereto via the external air valve device (33) and in particular wherein for cleaning the filter device (21) the external air valve device (33) is capable of being brought from a closed valve position to an open valve position and back again from the open valve position to a closed valve position.

**13.** Vacuum cleaning apparatus in accordance with any one of claims 8 to 12, **characterized by** being configured as a stand-alone apparatus (10).

**14.** Vacuum cleaning apparatus in accordance with any one of claims 8 to 12, **characterized by** being integrated in a surface cleaning machine.

**15.** Vacuum cleaning apparatus in accordance with any one of claims 8 to 14, **characterized in that** the method in accordance with any one of claims 1 to 13 is implemented in operation of the vacuum cleaning apparatus.

**Revendications**

**1.** Procédé pour nettoyer un filtre (22) d'un dispositif d'aspiration de poussières, le filtre (22) étant traversé par l'air aspiré produit par un ventilateur (28) lors du fonctionnement du dispositif d'aspiration de poussières, le procédé consistant :

- à mesurer une première pression ($p_1$) au niveau d'une entrée de flux du filtre (22) ;
- à mesurer une deuxième pression ($p_2$) au niveau d'une sortie de flux du filtre (22) ;
- à déterminer une chute de pression ($\Delta p$) sur le filtre (22) en tant que différence de pression entre la première pression ($p_1$) et la deuxième pression ($p_2$) ;
- à déterminer une grandeur (Q) caractérisant un débit volumique de l'air aspiré dans la sortie de flux du filtre (22) ;

**caractérisé par**

- la détermination d'une grandeur ($c_W$) caractérisant une résistance à l'écoulement du filtre (22) à partir de la différence de pression ($\Delta p$) et de la grandeur (Q) caractérisant le débit volumique ; et
- le déclenchement d'un nettoyage du filtre en fonction de la grandeur ($c_W$) déterminée caractérisant la résistance à l'écoulement du filtre.

**2.** Procédé selon la revendication 1, **caractérisé en ce que** la grandeur ($c_W$) déterminée caractérisant la résistance à l'écoulement est comparée à une valeur seuil, et lorsque cette grandeur ($c_W$) est supérieure à la valeur seuil, un nettoyage du filtre est déclenché, et en particulier **en ce que** la valeur seuil est prédéfinie.

**3.** Procédé selon l'une quelconque des revendications précédentes, **caractérisé en ce que** la grandeur (Q) caractérisant le débit volumique est déterminée à partir d'une courbe caractéristique du ventilateur (28), laquelle indique un rapport de dépendance entre le débit volumique (Q) et une pression ($p_2$) dans la sortie de flux du filtre, et en particulier **en ce que** la deuxième pression ($p_2$) est prise comme mesure de la pression dans la sortie de flux du filtre (22), et en particulier **en ce que** la courbe caractéristique (122) ou une relation approchant celle-ci a été préalablement déterminée et mise en mémoire dans un dispositif mémoire (108) et en particulier mise en mémoire sous la forme d'un tableau de valeurs.

**4.** Procédé selon l'une quelconque des revendications précédentes, **caractérisé en ce que** la grandeur ($c_W$) caractérisant la résistance à l'écoulement est définie comme le quotient de la différence de pression ($\Delta p$) déterminée et d'une fonction de la grandeur (Q) déterminée caractérisant le débit volumique, et en particulier **en ce que** le quotient de la différence de pression ($\Delta p$) déterminée et d'une puissance de la grandeur (Q) déterminée caractérisant le débit volumique est calculé et en particulier **en ce que** la puissance est la deuxième puissance.

5. Procédé selon l'une quelconque des revendications 2 à 4, **caractérisé en ce qu'**on vérifie si la valeur seuil est dépassée à plusieurs reprises pendant un laps de temps défini.

6. Procédé selon l'une quelconque des revendications 2 à 5, **caractérisé en ce qu'**on vérifie si après le dépassement de la valeur seuil, laquelle est une première valeur seuil, une deuxième valeur seuil est dépassée, laquelle est supérieure à la première valeur seuil, et en particulier **en ce qu'**un signal d'avertissement est délivré lorsque la valeur seuil est dépassée d'un nombre minimal pendant le laps de temps défini et/ou lorsque la deuxième valeur seuil est dépassée.

7. Procédé selon l'une quelconque des revendications précédentes, **caractérisé en ce que**, pour la mise en oeuvre d'un nettoyage du filtre, le filtre (22) est exposé à de l'air extérieur, et en particulier **en ce qu'**un ensemble soupape d'air extérieur (33) est commandé et une position de soupape fermée est amenée dans une position de soupape ouverte aux fins de nettoyage du filtre.

8. Dispositif d'aspiration, comprenant un orifice d'aspiration (16), un récipient collecteur de saletés (12), un système de filtre (21) pourvu d'au moins un filtre (22), un groupe d'aspiration (26) pourvu d'un ventilateur (28), le récipient collecteur de saletés (12) étant en liaison fluidique avec le groupe d'aspiration (26) par l'intermédiaire du système de filtre (21), un dispositif de nettoyage (33) pour le système de filtre (21), un premier capteur de pression (84), lequel détermine une première pression ($p_1$) dans une entrée de flux du système de filtre (21), un deuxième capteur de pression (86), lequel détermine une deuxième pression ($p_2$) dans un flux de sortie du système de filtre (21), un dispositif de commande (98), lequel commande le dispositif de nettoyage (33) et lequel est relié au premier capteur de pression (84) et au deuxième capteur de pression (86) aux fins de transmission de signaux, et un dispositif de détermination (106), lequel détermine une grandeur (Q) caractérisant un débit volumique d'air aspiré sur le système de filtre, **caractérisé en ce que** le dispositif de commande (98) comporte un dispositif d'évaluation (110), lequel détermine à partir d'une différence de pression ($\Delta p$) entre la première pression ($p_1$) et la deuxième pression ($p_2$) et de la grandeur (Q) caractérisant le débit volumique une grandeur ($c_W$) caractérisant une résistance à l'écoulement du système de filtre, et **en ce que** le dispositif de commande (98) comporte un dispositif de vérification de valeur seuil (112), lequel vérifie si la grandeur ($c_W$) déterminée caractérisant la résistance à l'écoulement est supérieure à une valeur seuil et déclenche dans ce cas une procédure de nettoyage du filtre à la suite d'une commande du dispositif de nettoyage (33).

9. Dispositif d'aspiration selon la revendication 8, **caractérisé en ce que** le dispositif de commande (98) comporte un dispositif mémoire (108) dans lequel une courbe caractéristique (122) du ventilateur (28) ou une relation approchant celle-ci est mise en mémoire, la courbe caractéristique (122) indiquant le rapport de dépendance entre le débit volumique (Q) et une pression ($p_2$) dans le flux de sortie du système de filtre (21).

10. Dispositif d'aspiration selon la revendication 9, **caractérisé en ce que** le dispositif de détermination (106) est intégré dans le dispositif de commande (98) et la grandeur (Q) caractérisant le débit volumique est déterminée à partir de la courbe caractéristique (122) ou de la relation approchant celle-ci.

11. Dispositif d'aspiration selon l'une quelconque des revendications 8 à 10, **caractérisé par** un avertisseur (142), lequel indique un état du filtre, et lequel est commandé par le dispositif de commande (98).

12. Dispositif d'aspiration selon l'une quelconque des revendications 8 à 11, **caractérisé en ce que** le dispositif de nettoyage est réalisé sous la forme d'un ensemble soupape d'air extérieur (33), le système de filtre (21) pouvant être exposé à l'air extérieur par l'ensemble soupape d'air extérieur (33) et en particulier l'ensemble soupape d'air extérieur (33), aux fins de nettoyage du système de filtre (21), pouvant être amené d'une position de soupape fermée dans une position de soupape ouverte et pouvant être ramené de la position de soupape ouverte dans une position de soupape fermée.

13. Dispositif d'aspiration selon l'une quelconque des revendications 8 à 12, **caractérisé par le fait qu'**il est réalisé sous la forme d'un appareil autonome (10).

14. Dispositif d'aspiration selon l'une quelconque des revendications 8 à 12, **caractérisé par le fait qu'**il est intégré dans une machine de nettoyage des sols.

**15.** Dispositif d'aspiration selon l'une quelconque des revendications 8 à 14, **caractérisé en ce que** le procédé selon l'une quelconque des revendications 1 à 13 est mis en oeuvre lors du fonctionnement du dispositif d'aspiration.

**FIG.1**

**FIG.2**

# FIG.3

# FIG.4

# FIG.5

# FIG.6

128

130

136

132

138

140

134

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012107103 A1
- WO 2012107595 A1
- JP 4792476 B
- EP 2548490 A2

- DE 202012003282 U1
- DE 202012003280 U1
- EP 0453177 B1
- EP 2011052039 W